# EUROPÄISCHE PATENTSCHRIFT

(11) **EP 2 221 491 B1**
(45) Veröffentlichungstag und Bekanntmachung des Hinweises auf die Patenterteilung: **04.01.2012**
(21) Anmeldenummer: 10000470.4
(22) Anmeldetag: 19.01.2010
(51) Int. Cl.: F16C 29/06

(54) **Linearbewegungsvorrichtung mit absatzfreiem Rücklaufdurchgang**
Linear movement device with interruption-free return opening
Dispositif de déplacement linéaire doté d'un passage de retour sans débit

(30) Priorität: 16.02.2009 DE 102009009005
(43) Veröffentlichungstag der Anmeldung: 25.08.2010
(73) Patentinhaber: ROBERT BOSCH GMBH, 70469 Stuttgart (DE)
(72) Erfinder: Keller, Bernhard, 97535 Kaisten (DE); Pfister, Steffen, 97464 Niederwerrn (DE)
(74) Vertreter: Maiß, Harald

(56) Entgegenhaltungen:
- DE-A1- 19 956 296
- JP-A- 7 208 467
- JP-A- 2008 275 066
- JP-U- 60 150 324

## Beschreibung

Die Erfindung betrifft eine Linearbewegungsvorrichtung gemäß dem Oberbegriff von Anspruch 1. Derartige Linearbewegüngsvorrichtungen sind beispielsweise als Kugel-oder Rollenschienenfiihrungen bekannt, wobei die erste Baugruppe der Führungswagen und die zweite Baugruppe die Führungsschiene ist. Die Erfindung ist aber auch in Linearmodulen anwendbar, bei denen eine Linearführung mit einer zugeordneten Antriebsvorrichtung zu einer Baueinheit integriert ist. Als Anwendungsgebiet kommen auch Wälzkörpergewindetriebe in Frage, wobei die erste Baugruppe von der Mutter und die zweite Baugruppe von der Gewindespindel verkörpert wird.

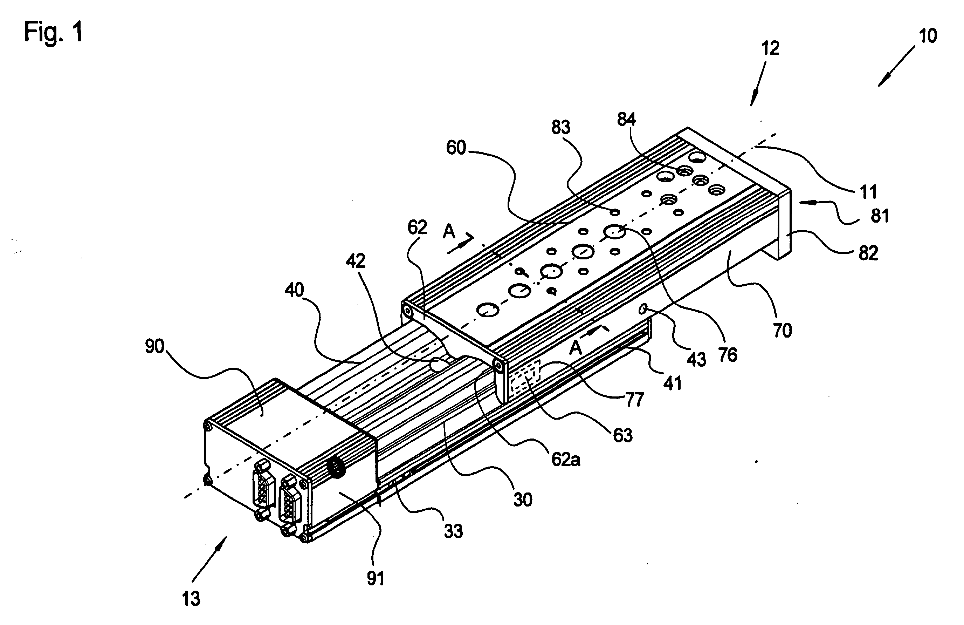

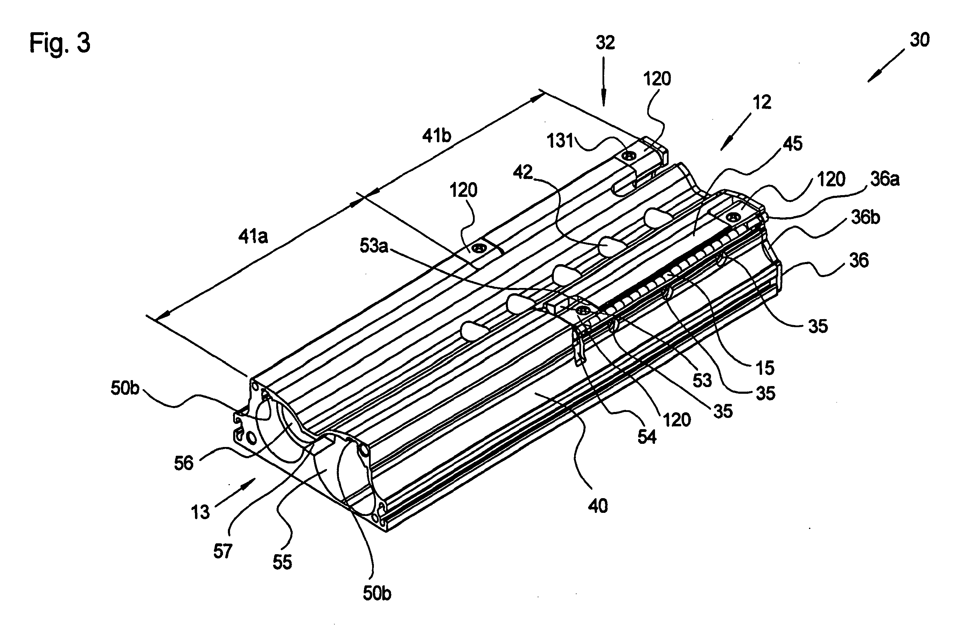

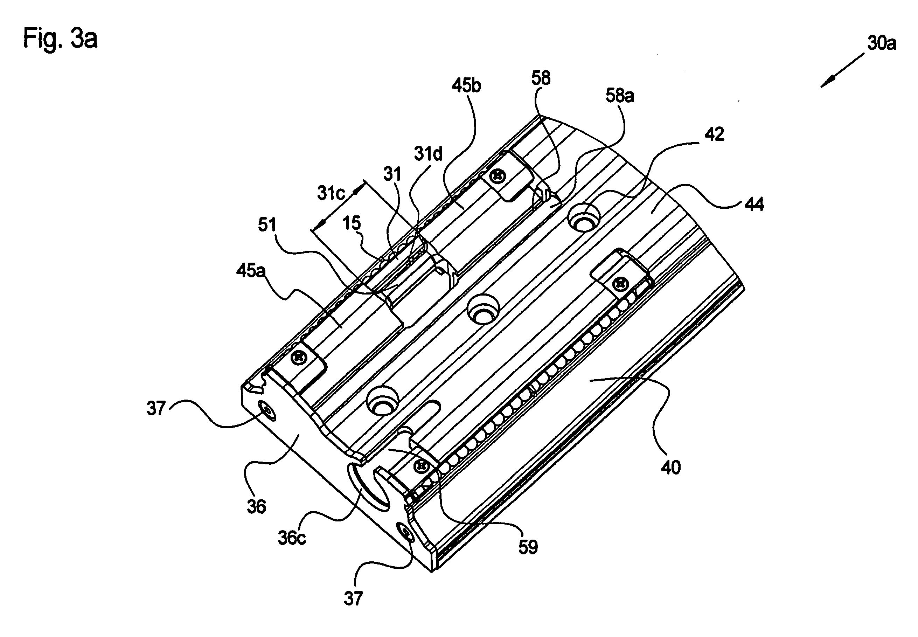

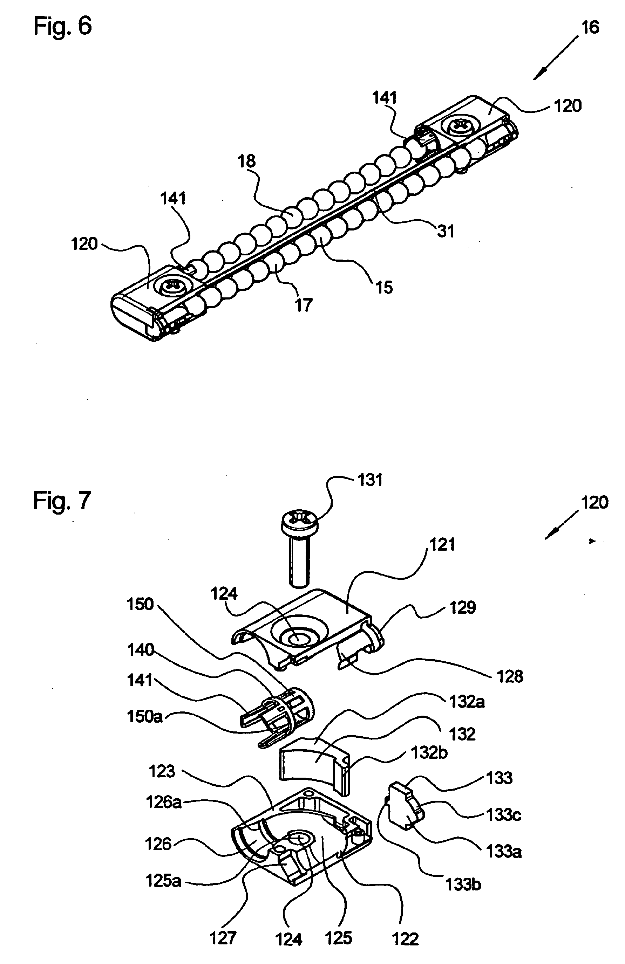

Aus der US 5 193 914 ist eine Linearbewegungsvorrichtung in Form einer Rollenschienenführung bekannt. Gemäß der Fig. 1 der US 5 193 914 umfasst die Linearbewegungsvorrichtung eine erste Baugruppe 1 in Form eines Führungswagens. Die erste Baugruppe ist längsbeweglich gegenüber einer zweiten Baugruppe 2 in Form einer Führungsschiene. Hierfür sind an der ersten Baugruppe insgesamt vier sich in eine Längsrichtung erstreckende erste Wälzflächen 9; 10; 11; 12 vorgesehen, der zweite Wälzflächen 5; 6; 7; 8 an der zweiten Baugruppe gegenüberstehen. Zwischen den genannten Wälzflächen ist je eine Reihe von rollenförmigen Wälzkörpern angeordnet, die jeweils in der ersten Baugruppe bzw. im Führungswagen endlos umlaufen können. Zu diesem Zweck sind in der ersten Baugruppe insgesamt vier Rücklaufdurchgänge 15; 17; 20; 21 vorgesehen. Die erste Baugruppe umfasst einen ersten Grundkörper, an dessen beiden Längsstimseiten je eine als Ganzes montierbare Umlenkbaugruppe vorgesehen ist. Gemäß Fig. 6 und 7 der US 5 193 914 sind in jeder Umlenkbaugruppe 13 insgesamt vier gebogene Umlenkdurchgänge 14; 16; 18; 19 vorgesehen, welche die ersten Wälzflächen mit den zugeordneten Rücklaufdurchgängen verbinden, so dass ein endloser Umlaufweg entsteht. Damit die Umlenkdurchgänge im Wesentlichen absatzfrei zu den Rücklaufdurchgängen ausgerichtet sind, sind an den Umlenkbaugruppen Fortsätze 62 vorgesehen, die in den Rücklaufdurchgang eingreifen. Hierfür ist an dem Rückführrohr 70, in dem der entsprechende Rücklaufdurchgang ausgebildet ist, je eine Ausnehmung vorgesehen, die gemäß Fig. 3 durch die Flächen 39; 40 begrenzt wird.

Der Nachteil der US 5 193 914 besteht darin, dass ein toleranzbedingter Versatz zwischen dem Umlenkdurchgang und dem Rücklaufdurchgang nur in engen Grenzen ausgeglichen werden kann. Der größte zulässige Versatz ergibt sich aus Laufspiel zwischen dem Wälzkörper und dem Umlenkdurchgang bzw. dem Rücklaufdurchgang. Dieses Problem ist besonders kritisch, wenn mehrere Wälzkörperumläufe zum Einsatz kommen, da an jedem Wälzkörperumlauf eine ordnungsgemäße Ausrichtung gegeben sein muss. Besonders große Toleranzen sind bei Linearbewegungsvorrichtungen vorzufinden, bei denen der erste Grundkörper aus Aluminium besteht, wobei der Rücklaufdurchgang im Strangpressverfahren hergestellt und vollständig und unmittelbar am ersten Grundkörper ausgebildet ist. Der Rücklaufdurchgang ist vollständig im Sinne der vorliegenden Anmeldung am ersten Grundkörper angebracht, wenn letztgenannter den Rücklaufdurchgang vollständig umgibt. Dabei kommt es nicht darauf an, dass diese Bedingung über die gesamte Länge des Rücklaufdurchgangs erfüllt ist, insbesondere an dessen Enden. Die zuletzt beschriebene Ausführungsform ist besonders kostengünstig und kommt daher besonders bevorzugt zusammen mit der Erfindung zum Einsatz.

Aus der JP 2008-275066 A ist eine Linearbewegungsvorrichtung bekannt. Die zweite Baugruppe wird von einer sich in eine Längsrichtung erstreckenden Führungsschiene gebildet. Die erste Baugruppe ist in Form eines Führungswagens ausgebildet, der die Führungsschiene U-förmig umgreift, wobei er in Längsrichtung gegenüber dieser beweglich ist. In der ersten Baugruppe sind mehrere erste Wälzflächen vorgesehen, denen jeweils eine zweite Wälzfläche an der zweiten Baugruppe gegenüberliegt, wobei zwischen der ersten und der zweiten Wälzfläche eine Reihe von kugelförmigen Wälzkörpern angeordnet ist. Die erste Baugruppe umfasst einen einstückigen Grundkörper, an dessen beiden in Längsrichtung weisenden Enden je eine gesonderte Umlenkbaugruppe angeordnet ist. In dem Grundkörper sind mehrere Rücklaufdurchgänge vorgesehen, die über zwei gebogene Umlenkdurchgänge mit einer zugeordneten ersten Wälzfläche verbunden sind, so dass die Wälzkörper endlos umlaufen können. Die gebogenen Durchgänge sind vollständig in der Umlenkbaugruppe ausgeführt und zwar in Form eines U-förmig gebogenen Rohres. Die Enden des U-förmigen Rohres bilden Fortsätze, die aus der Umlenkbaugruppe herausragen, wobei ein Rohrende in den Rücklaufdurchgang eingreift.

Aus der JP 60-150324 U ist eine weitere Linearbewegungsvorrichtung mit Wälzkörperumlauf bekannt. Dort ist ein kurzes Rohr vorgesehen, das in den gebogenen Umlenkdurchgang und den Rücklaufdurchgang eingreift, so dass die Wälzkörper vom gebogenen Umlenkdurchgang über das kurze Rohr in den Rücklaufdurchgang laufen können.

Die Aufgabe der Erfindung besteht darin, eine Linearbewegungsvorrichtung bereitzustellen, bei der größere Versatzfehler zwischen dem Rücklaufdurchgang und dem Umlenkdurchgang ausgeglichen werden können, ohne dass der Wälzkörperablauf gestört wird.

Diese Aufgabe wird durch die Merkmale von Anspruch 1 gelöst.

Mit dem biegevesformbaren Rohr kann je nach dessen Länge ein beliebig großer Versatz zwischen dem Umlenkdurchgang und dem Rücklaufdurchgang durch eine Biegeverformung ausgeglichen werden. Hierbei ist insbesondere an eine elastische Verformung gedacht. Gleichzeitig ist es nicht notwendig, das Laufspiel zwischen dem flexiblen Durchgang und den Wälzkörpern über das für einen reibungsarmen Lauf notwendige Maß hinaus zu erhöhen. Gleiches trifft auf den Umlenkdurchgang und den Rücklaufdurchgang zu. Damit ergibt sich ein besonders störungsfreier Wälzkörperablauf.

An dem biegeverformbaren Rohr ist wenigstens ein fingerartiger sich in Längsrichtung erstreckender Fortsatz vorgesehen, der in eine angepasste radiale Nut des Rücklaufdurchgangs eingreift.

In den abhängigen Ansprüchen sind vorteilhafte Weiterbildungen und Verbesserungen der Erfindung angegeben.

Das biegeverformbare Rohr kann in einer Ausnehmung der Umlenkbaugruppe angeordnet sein, wobei die Umlenkbaugruppe unmittelbar am ersten Grundkörper anliegt. Durch die genannte Ausnehmung wird der notwendige Aufnahmeraum für das biegsame Rohr zwischen der Umlenkbaugruppe und dem ersten Grundkörper bereitgestellt, so dass letztgenannte unmittelbar aneinander befestigt werden können. Weiter wird durch die genannte Ausnehmung der Bewegungsraum bereitgestellt, der für die Ausgleichsbewegung des biegeverformbaren Rohres erforderlich ist. Die Abmessungen der Ausnehmung sind dementsprechend so auszulegen, dass im Wesentlichen jeder in der Praxis vorkommende Lagefehler durch eine Biegeverformung des biegsamen Rohres ausgeglichen werden kann, ohne dass letztgenanntes mit der zugeordneten Ausnehmung kollidiert. Die Anordnung der genannten Ausnehmung in der Umlenkbaugruppe ist besonders vorteilhaft, weil letztgenannte typischerweise aus Kunststoff im Spritzgussverfahren hergestellt wird, so dass die Ausnehmung besonders kostengünstig ist.

Das biegeverformbare Rohr kann wenigstens ein radiales Fenster aufweisen. Mit dem radialen Fenster soll die Biegesteifigkeit des Rohres herabgesetzt werden, so dass es eine genügend große elastische Verformbarkeit aufweist. Im Gegenzug kann das biegeelastische Rohr mit einer für das Spritzgießen sinnvollen Wanddicke ausgeführt werden. Die Größe der Fenster ist dabei so zu wählen, dass die Führung der Wälzkörper in dem flexiblen Durchgang im Wesentlichen nicht beeinträchtigt wird.

Das biegeverformbare Rohr kann einstückig in Form eines gesonderten Überführungsteils ausgebildet sein. Auf diese Weise ist es besonders einfach im Kunststoffspritzgussverfahren herstellbar, weil es nahezu keine Hinterschneidungen aufweist, die ein aufwändiges Spritzgusswerkzeug erfordern würden. Gleiches trifft auch auf die Bauteile der verbleibenden Umlenkbaugruppe zu, die durch die vorgeschlagene Maßnahme geometrisch ebenfalls besonders einfach gestaltet werden können.

Die Ausnehmung kann sich in einer Richtung von der Umlenkbaugruppe zum ersten Grundkörper erweitern, vorzugsweise kegelförmig erweitert, wobei der vom ersten Grundkörper abgewandte Endbereich der Ausnehmung an das gesonderte Überführungsteil angepasst ist. Das Überführungsteil ist somit in dem genannten Endbereich formschlüssig an der Umlenkbaugruppe festgelegt. Gleichzeitig wird durch die sich erweiternde Ausnehmung der Umlenkbaugruppe der notwendige Bewegungsspielraum für das biegeverformbare Rohr bereitgestellt. Eine kegelförmige Erweiterung ist besonders bevorzugt, weil damit der Bewegungsspielraum in jeder Querrichtung gleich groß ist.

Die Erfindung wird im Folgenden anhand der beigefügten Zeichnungen näher erläutert. Es stellt dar:
- Fig. 1: eine perspektivische Ansicht einer erfindungsgemäßen Linearbewegungsvorrichtung;
- Fig. 2: einen Querschnitt der Linearbewegungsvornchtung gemäß Fig. 1, wobei die Schnittebene in Fig. 1 mit A-A gekennzeichnet ist;
- Fig. 3: eine perspektivische Ansicht der ersten Baugruppe der Linearbewegungsvorrichtung gemäß Fig. 1;
- Fig. 3a: eine perspektivische Teilansicht einer zweiten Ausführungsfbrm der ersten Baugruppe gemäß Fig. 3;
- Fig. 4: eine perspektivische Ansicht der Antriebsbaugruppe der Linearbewegungsvorrichtung gemäß Fig. 1;
- Fig. 5: eine perspektivische Ansicht der zweiten Baugruppe der Linearbewegungsvorrichtung gemäß Fig. 1;
- Fig. 6: eine perspektivische Ansicht eines Wälzkörperumlaufs ohne die umgebende erste Baugruppe;
- Fig. 7: eine Explosionsdarstellung der Umlenkbaugruppe des Wälzkörperumlaufs gemäß Fig. 6;
- Fig. 8: eine perspektivische Ansicht des Überführungsteils gemäß Fig. 7;
- Fig. 9: einen Querschnitt eines Rücklaufdurchgangs mit eingesetztem Überführungsteil;
- Fig. 10: eine Explosionsdarstellung einer dritten Ausführungsform der Umlenkbaugruppe; und
- Fig. 11: einen Querschnitt der Linearbewegungsvorrichtung im Bereich des ersten und des zweiten Wälzflächenteils.

Fig. 1 zeigt eine erfindungsgemäße Linearbewegungsvorrichtung 10 in Form eines Linearmoduls. Die Linearbewegungsvorrichtung umfasst eine erste Baugruppe 30 in Form eines Gehäuses, das sich in einer Längsrichtung 11 erstreckt. Weiter ist eine zweite Baugruppe 60 in Form eines Tischteils vorgesehen, welche längsbeweglich gegenüber der ersten Baugruppe 30 ist. Die zweite Baugruppe 60 umfasst einen zweiten Grundkörper 70, der aus Aluminium besteht, wobei an dessen vorderem Ende 12 eine Befestigungsplatte 82 vorgesehen ist, die sich in jeder Stellung der zweiten Baugruppe vor dem vorderen Ende der ersten Baugruppe 30 befindet. Bei der Befestigungsplatte 82 handelt es sich um eine ebene Platte aus Aluminium, die ebenso wie der zweite Grundkörper 60 mit verschiedenen Befestigungsmitteln 81 in Form von Gewinde- 83 und Durchgangsbohrungen 84 versehen ist, so dass diese an einer (nicht dargestellten) übergeordneten Baugruppe befestigt werden können.

Die erste Baugruppe 30 umfasst einen ersten Grundkörper 40, der ebenfalls aus Aluminium besteht. In dem ersten Grundkörper 40 sind Durchgangsbohrungen 42 als Befestigungsmittel vorgesehen, so dass die erste Baugruppe 30 an einer (nicht dargestellten) untergeordneten Baugruppe befestigt werden kann. Da die Befestigungsmittel 42 der ersten Baugruppe 30 zum Teil durch die zweite Baugruppe 60 verdeckt sind, sind in letztgenannter diverse durchgehende Montagebohrungen 76 vorgesehen, durch die hindurch Schraubbolzen in die Durchgangsbohrungen 42 der ersten Baugruppe 30 eingeführt werden können.

Am hinteren Ende 13 des zweiten Grundkörpers 70 ist eine Abstreifplatte 62 aus Stahlblech mittels Befestigungsschrauben 62a montiert. Die Abstreifplatte 62 steht dem ersten Grundkörper 40 mit geringem Abstand gegenüber, so dass im Wesentlichen keine Fremdkörper zwischen die erste 30 und die zweite Baugruppe 60 gelangen können. Mit der Abstreifplatte 61 wird überdies eine stirnseitige (grobschematisch dargestellte) Magnetausnehmung 77 im zweiten Grundkörper 70 verschlossen, in der ein (grobschematisch dargestellter) Permanentmagnet 63 aufgenommen ist. Das Magnetfeld dieses Permanentmagneten 63 kann durch einen oder mehrere Sensoren 33 erfasst werden, die in einer sich in Längsrichtung 11 erstreckenden, hinterschnittenen Sensomut 41 in jeder beliebigen Längsposition festlegbar sind. Hierdurch kann eine oder mehrere Stellungen der zweiten Baugruppe 60 bezüglich der ersten Baugruppe 30 durch eine (nicht dargestellte) übergeordnete Steuerungsvorrichtung erkannt werden.

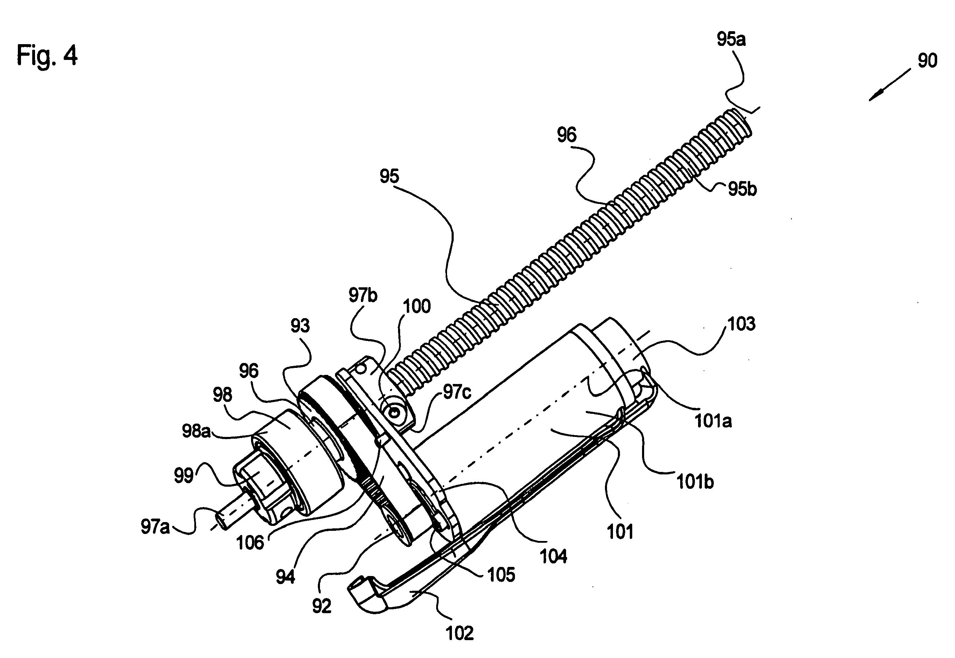

Am hinteren Ende 13 des ersten Grundkörpers 40 ist eine Antriebsbaugruppe 90 vorgesehen, mit der die zweite Baugruppe 60 gegenüber der ersten Baugruppe 30 bewegt werden kann. In Fig. 1 ist jedoch nur das Getriebegehäuse 91 der Antriebsbaugruppe 90 zur erkennen, wobei letztgenannte mit Bezug auf Fig. 4 noch näher erläutert wird.

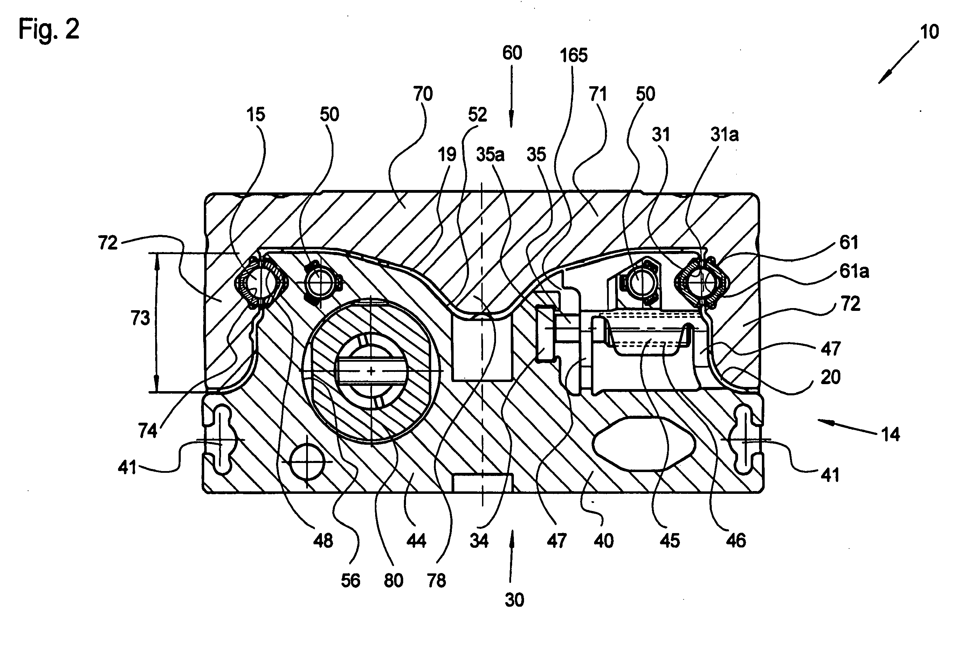

Fig. 2 zeigt einen Querschnitt der Linearbewegungsvorrichtung 10. Zu erkennen ist der insgesamt U-förmige Aufbau des zweiten Grundkörpers 70 mit einer Basis 71 und zwei senkrecht von dieser abstehenden U-Schenkeln 72. An den gegenüberliegenden Innenseiten der U-Schenkel ist je ein zweites Wälzflächenteil 61 vorgesehen. Bei dem zweiten Wälzflächenteil 61 handelt es sich um einen sich in Längsrichtung erstreckenden Profilkörper, der eine konstante im Wesentlichen V-förmige Querschnittsform aufweist. An der Innenseite der V-Form ist das aus gehärtetem Wälzlagerstahl bestehende zweite Wälzflächenteil 61 mit einer zweiten Wälzfläche 61 a versehen, die mit einem spitzbogenförmigen Querschnittsprofil ausgeführt ist, so dass die kugelförmigen Wälzkörper 15 die zweite Wälzfläche 61a in bekannter Weise an zwei Punkten berühren. Dem zweiten Wälzflächenteil 61 steht ein erstes Wälzflächenteil 31 gegenüber, das bis auf die Länge identisch mit dem zweiten Wälzflächenteil 61 ausgeführt ist. Die Wälzkörper 15 können dementsprechend zwischen den ersten und den zweiten Wälzflächen 31 a; 61 a abwälzen, so dass die zweite Baugruppe 60 an der ersten Baugruppe 30 längsbeweglich abgestützt ist. Der erste 40 und der zweite Grundkörper 70 sind jeweils aus einem Rohteil gefertigt, das aus Aluminium im Strangpressverfahren hergestellt ist, wobei das beim Strangpressen hergestellte Querschnittsprofil in weiten Teilen dem in Fig. 2 zu erkennenden Querschnittsprofil entspricht. Auf die Geometrien, die nach dem Strangpressen noch Span abhebend bearbeitet werden, wird im Folgenden entsprechend hingewiesen. Hierbei sind an erster Stelle die Aufnahmausnehmungen 48; 74 zu nennen, in denen die ersten 31 und die zweiten Wälzflächenteile 61 formschlüssig aufgenommen sind. Erstgenannte 48; 74 müssen genau an die zugeordneten Wälzflächenteile 31; 61 angepasst sein und eine hohe Geradheit aufweisen, damit die Wälzführung steif und genau arbeitet. Sie wurden deshalb mittels einer Fräsbearbeitung am entsprechenden Rohteil angebracht.

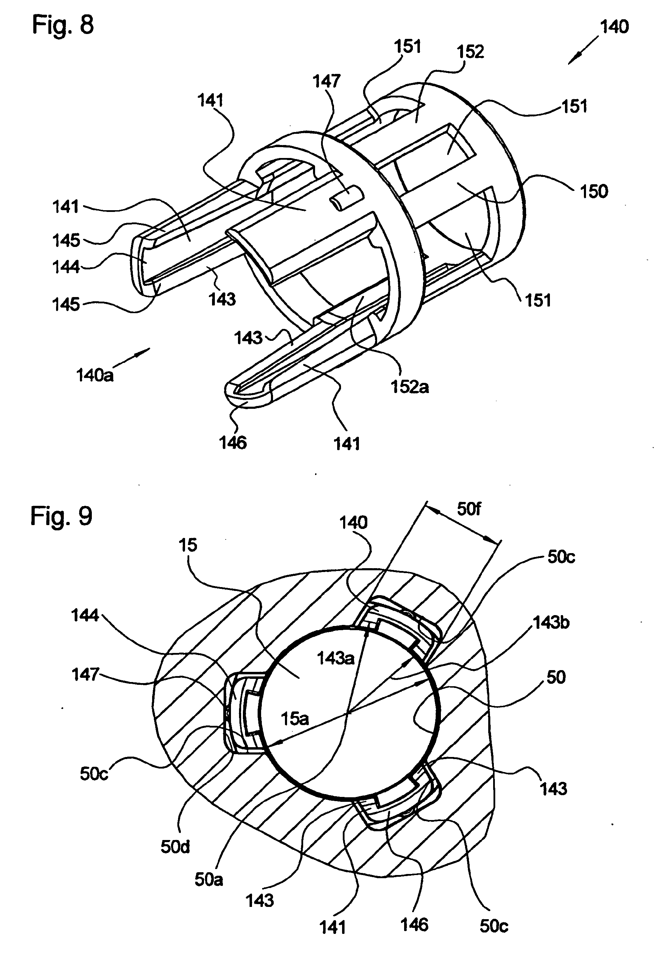

Jeder ersten Wälzfläche 31 ist ein Rücklaufdurchgang 50 zugeordnet, der ohne weitere Nachbearbeitung beim Strangpressen hergestellt wird. Der Rückführkanal 50, dessen Querschnittsform mit Bezug auf Fig. 9 noch näher beschrieben wird, ist an beiden Enden über je einen gebogenen Umlenkdurchgang (Nr. 125; Fig. 7) mit der zugeordneten ersten Wälzfläche 31 a verbunden, so dass die Wälzkörper 15 endlos umlaufen können.

Das in Fig. 2 rechte erste Wälzflächenteil 31 ist an einem Verstellabschnitt 45 des ersten Grundkörpers 40 aufgenommen, der gegenüber dem Basisabschnitt 44 des ersten Grundkörpers 40, an dem die Befestigungsmittel (Nr. 42 ; Fig. 1) für die untergeordnete Baugruppe vorgesehen sind, lageverstellbar ist, so dass die Vorspannung der Wälzführung einstellbar ist. Der Verstellabschnitt 45 ist zu diesem Zweck über zwei sich in Längsrichtung erstreckende biegeelastische Stege 47 mit dem Basisabschnitt 44 einstückig verbunden. Der Verstellabschnitt 45 ist mit einem Verstellmittel in Form eines Schraubbolzens 35 versehen, der in ein (grobschematisch dargestelltes) Gewinde 46 des Verstellabschnitts 45 eingeschraubt ist. Da der Schraubbolzen 35 durch die zweite Baugruppe 60 verdeckt ist, ist in letztgenannter ein Durchbruch (Nr. 43; Fig. 1) vorgesehen, so dass er mit einem Schraubwerkzeug, beispielsweise einem Innensechskantschlüssel, verstellt werden kann. Die Stirnfläche 35a des Schraubbolzens stützt sich über eine gesonderte rechteckige Stahlleiste 34 am Basisabschnitt 44 ab. Die Stahlleiste 34 ist notwendig, damit der Schraubbolzen 35 das weiche Aluminium des ersten Grundkörpers 40 nicht plastisch verformt, was ein unerwünschtes Nachlassen der Vorspannkraft auf die Wälzkörper 15 zur Folge hätte. Die genannten biegeelastischen Stege 47 sind jeweils parallel zu den U-Schenkeln 72 der zweiten Baugruppe 60 angeordnet, wobei die Schraubachse des Schraubbolzens 35 senkrecht zu diesen ausgerichtet ist, so dass eine zur Vorspannungseinstellung geeignete Verstellrichtung gegeben ist.

Weiter ist darauf hinzuweisen, dass der erste Grundkörper 40 dem zweiten Grundkörper 70 mit einem geringen Abstand äquidistant gegenüber steht, so dass zwischen diesen ein enger Dichtspalt 19 vorhanden ist der verhindert, dass Fremdkörper zwischen diese Teile gelangen können. Insbesondere soll verhindert werden, dass Fremdkörper zu den Wälzkörpern 15 gelangen können, da dies zu Beschädigungen führen kann, wenn die Fremdkörper zwischen die Wälzkörper 15 und die zugeordneten Wälzflächen 31 a; 61 a geraten. Um das Eindringen von Fremdkörpern weiter zu erschweren ist der Dichtspalt 19 ausgehend von der Außenoberfläche 14 der Linearbewegungsvorrichtung 10 mit einem Richtungswechsel 20 versehen. An dieser Stelle sei auch auf die Versteifungsrippe 78 am zweiten Grundkörper 70 hingewiesen, die dessen Biegesteifigkeit erhöhen soll. Die Versteifungsrippe 78 greift in eine Rippenausnehmung 52 am ersten Grundkörper 40 ein, so dass auch in diesem Bereich der genannte enge Dichtspalt 19 vorliegt.

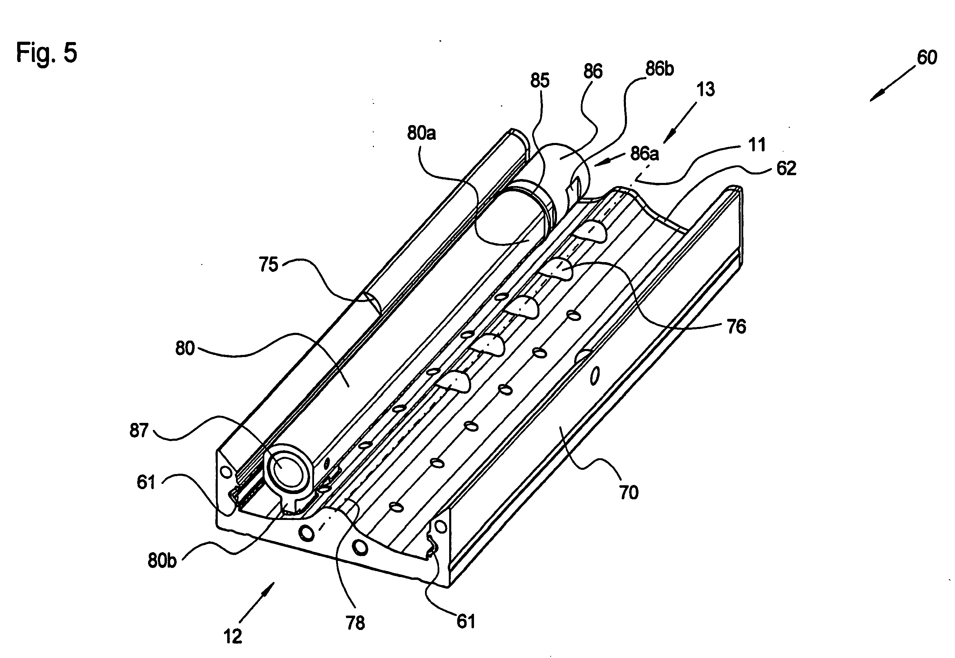

In Fig. 2 ist außerdem die T-förmige Querschnittsform der hinterschnittenen Sensomut 41 zu erkennen. Weiter ist auf das Schubrohr 80 hinzuweisen, das mit Bezug auf Fig. 5 noch näher beschrieben wird. Das Schubrohr 80 ist mit einem geringen Abstand in einer Mutterausnehmung 56 des ersten Grundkörpers 40 aufgenommen.

Fig. 3 zeigt die erste Baugruppe 30. Der erste Grundkörper 40 der ersten Baugruppe 30 ist in einen ersten 40a und einen zweiten Längsabschnitt 40b aufgeteilt, die unmittelbar aneinander grenzen. Im zweiten Längsabschnitt 40b, der sich am vorderen Ende 12 der ersten Baugruppe 30 befindet, sind die bereits beschriebenen endlos umlaufenden Wälzkörper 15 vorgesehen. In Fig. 3 sind insbesondere die vier Umlaufbaugruppen 120 zu erkennen, die jeweils einen einzigen gebogenen Umlenkdurchgang (Nr. 125; Fig. 7) aufweisen, der die zugeordnete erste Wälzfläche (Nr. 31a; Fig. 2) mit dem zugeordneten Rücklaufdurchgang (Nr. 50; Fig. 2) verbindet. Die identisch ausgeführten Umlenkbaugruppen 120 sind so gestaltet, dass sie von einer einzigen Montageseite 32 her montiert werden können, wobei die entsprechenden Befestigungskonturen 53 im ersten Grundkörper 40 ebenfalls ausschließlich von der Montageseite 32 her gefertigt werden können. Die Montageseite 32 ist die in Fig. 3 obere Seite der ersten Baugruppe 30. Als Befestigungskontur ist im ersten Grundkörper 40 für jede Umlenkbaugruppe je eine Umlenkausnehmung 53 vorgesehen, die mittels eines Schaftfräsers hergestellt ist. An dieser Stelle ist anzumerken, dass sich der Rücklaufdurchgang (Nr. 50; Fig. 2) über die gesamte Länge des stranggepressten Rohteils erstreckt, wobei in Fig. 2 noch die Reste 50b des Rücklaufdurchgangs zu erkennen sind, die im ersten Längsabschnitt 40a des ersten Grundkörpers 40 keine Funktion mehr haben. Die vier Umlenkbaugruppen 120 sind jeweils mit einem einzigen Schraubbolzen 131 am ersten Grundkörper 40 befestigt, wobei der Schraubbolzen 131 ebenfalls von der genannten Montageseite 32 her eingeschraubt werden kann und wobei auch die zugeordnete Gewindebohrung von der Montageseite 32 her eingeschnitten werden kann. Diese Ausgestaltung der Wälzkörperrückführung ermöglicht es, dass eine Bauform der Umlenkbaugruppe 120 in vielen unterschiedlichen Bauformen von Linearbewegungsvorrichtungen 10 eingesetzt werden kann.

Der bereits beschriebene Verstellabschnitt 45 des ersten Grundkörpers 40 ist in Fig. 3 auf der rechten Seite angeordnet. Zu erkennen ist insbesondere, dass drei Schraubbolzen 35 vorgesehen sind, mit denen die Einstellung der Wälzkörpervorspannung vorgenommen werden kann. Mit dem Querschlitz 54 und dem Längsschlitz (Nr. 165; Fig. 2) wird der Verstellabschnitt 45 von dem Basisabschnitt 44 des ersten Grundkörpers 40 getrennt, so dass seine Verstellbewegung nicht verhindert wird.

An der Vorderseite 12 der ersten Baugruppe 30 ist eine gesonderte Verschlussplatte 36 vorgesehen, die aus Stahlblech hergestellt ist. Die Verschlussplatte 36 ist mit geringem Abstand äquidistant zum zweiten Grundkörper (Nr. 70; Fig. 2) ausgeführt. Hinzuweisen ist auf den Anschlagabschnitt 36b der Verschlussplatte 36, der etwas über den ersten Grundkörper 40 übersteht, so dass er als Endanschlag für die zweite Baugruppe wirken kann. Am zweiten Grundkörper ist zu diesem Zweck eine Anschlagfläche (Nr. 79; Fig. 5) vorgesehen, die sich quer zur Längsrichtung erstreckt, so dass sie mit dem Anschlagabschnitt 36b zur Anlage kommen kann. Die Anschlagfläche wird hergestellt, indem die U-Schenkel des Rohteils des ersten Grundkörpers an ihrer Stirnseite entsprechend abgefräst werden. Weiter ist auf den Abstreifvorsprung 36a hinzuweisen, der an die zweite Wälzfläche (Nr. 61a; Fig. 2) der zweiten Baugruppe 60 mit sehr geringem Abstand angepasst ist. Mit diesem sollen Fremdkörper wie Metallspäne von der zweiten Wälzfläche entfernt werden, so dass diese nicht in den Wälzkörperumlauf geraten und dort Schäden verursachen können.

Im ersten Längsabschnitt 40a des ersten Grundkörpers 40 ist eine Motorausnehmung 55 zur Aufnahme des Elektromotors (Nr. 101; Fig. 4) der Antriebsbaugruppe vorgesehen. Die Motorausnehmung 55 ist vollständig mittels einer Fräsbearbeitung hergestellt, da sich im Rohteil des ersten Grundkörpers 40 an dieser Stelle die biegeelastischen Stege (Nr. 47; Fig. 2) des Verstellmechanismus zur Vorspannungseinstellung der Wälzführung befinden. Die Außenoberfläche des ersten Grundkörpers 40 ist im ersten Längsabschnitt 40a ausgehend vom Strangpressrohteil nicht mehr bearbeitet. Diese Kontur musste dementsprechend im zweiten Längsabschnitt 40b weggefräst werden, um die Aufnahmeausnehmung (Nr. 48; Fig. 2) des ersten Wälzflächenteils bereit zu stellen.

Neben der Motorausnehmung 55 ist eine Mutterausnehmung 56 vorgesehen, die sich über die gesamte Länge der ersten Baugruppe 30 erstreckt, wobei die Mutterausnehmung 56 zusammen mit der Motorausnehmung 55 einen Antriebshokaum zur Aufnahme der Antriebsbaugruppe (Nr. 90; Fig. 4) bildet. Die Mutterausnehmung 56 dient zur Aufnahme der Gewindespindel (Nr. 95; Fig. 4) der Antriebsbaugruppe und zur Aufnahme des zugeordneten Schubrohres (Nr. 80; Fig. 5) der zweiten Baugruppe. Sowohl die Mutter- 56 als auch die Motorausnehmung 55 sind zumindest abschnittsweise im Höhenbereich (Nr. 73; Fig. 2) der U-Schenkel des zweiten Grundkörpers angeordnet, so dass die Linearbewegungsvorrichtung eine besonders geringe Bauhöhe aufweist.

Die Motorausnehmung 55 ist über eine Luftaustauschausnehmung 57 mit der Mutterausnehmung 56 verbunden, wobei alle genannten Ausnehmungen durch die Antriebsbaugruppe (Nr. 90; Fig. 1) luftdicht abgedeckt werden. Dementsprechend strömt die durch beim Einfahren der zweiten Baugruppe aufgrund der Bewegung der Mutter und des Schubrohres (Nr. 80; Fig. 5) in der Mutterausnehmung 56 verdrängte Luft über die Luftaustauschausnehmung 57 in die Motorausnehmung 55, dort am Elektromotor (Nr. 101; Fig. 4) vorbei und über den Querschlitz 54 ins Freie. Beim Ausfahren der zweiten Baugruppe stellt sich die umgekehrte Strömungsrichtung ein. Durch das Vorbeiströmen der Luft am Elektromotor wird dieser gekühlt, so dass ein besonders kleiner Elektromotor mit einer hohen Leistungsdichte zum Einsatz kommen kann.

Fig. 3a zeigt eine zweite Ausführungsform 30a der ersten Baugruppe. Diese unterscheidet sich von der ersten Ausführungsform 30 gemäß Fig. 3 nur dadurch, dass das verstellbare erste Wälzflächenteil 31 in einem mittleren Längsabschnitt 31c nicht am ersten Grundkörper 40 abgestützt ist. Diese Maßnahme wurde vorgenommen, um einen Wälzkörperstau durch die verhältnismäßig langen ersten Wälzflächen zu verhindern. Die hohe Länge der ersten Wälzflächen wurde gewählt, damit die erste Baugruppe 30a hohe Drehmomentbelastungen steif abstützen kann.

Der genannte mittlere Längsabschnitt 31c wird dadurch gebildet, dass der Grundkörper 40 in diesem Bereich nahezu vollständig weggefräst wurde, so dass ein erster 45a und ein zweiter Verstellabschnitt 45b des ersten Grundkörpers 40 gebildet wird, die mit Abstand zueinander angeordnet sind. In dem mittleren Längsabschnitt 31c befindet sich somit hinter dem ersten Wälzflächenteil überhaupt kein Material mehr, das dieses abstützen könnte; zwischen dem ersten Wälzflächenteil 31 und dem ersten Grundkörper 40 ist im mittleren Längsabschnitt 31c also ein Abstand 31d vorhanden. Da das erste Wälzflächenteil 31 nur eine vergleichsweise geringe Steifigkeit aufweist, erfahren die dort ablaufenden Wälzkörper 15 nur eine sehr geringe Last, so dass sie bei Auftreten eines Wälzkörperstaues auch gleitend verschoben werden können, was den Wälzkörperstau sofort wieder auflöst.

Der erste 45a und der zweite Verstellabschnitt 45b sind nur noch über das Rückführrohr 51, in dem der Rücklaufdurchgang (Nr. 50; Fig. 2) angeordnet ist, einstückig miteinander verbunden. Da das Rückführrohr 51 nur eine sehr geringe Wandstärke aufweist, besitzt es eine relative Steifigkeit, so dass der erste 45a und der zweite Verstellabschnitt 45b weitgehend unabhängig voneinander verstellt werden können, um die Vorspannung der Wälzführung einzustellen. Es hat sich als günstig erwiesen, wenn der erste 45a und der zweite Verstellabschnitt 45b nur mit jeweils einem einzigen Verstellmittel in Form eines Schraubbolzens versehen werden, da sich so die Vorspannungseinstellung am schnellsten durchführen lässt.

Im Übrigen ist die zweite Ausführungsform 30a der ersten Baugruppe identisch mit der ersten Ausführungsform 30 ausgeführt. Dies trifft beispielsweise auf die Trennausfräsung 58a zu, mit der ein Trennspalt 58 zwischen dem Verstellabschnitt 45; 45a; 45b und dem Basisabschnitt 44 des ersten Grundkörpers 40 gebildet wird, so dass die gewünschte Verstellbarkeit des Verstellabschnitts gewährleistet ist. Weiter sind in Fig. 3a die Befestigungsschrauben 37 zu erkennen, mit denen die Verschlussplatte 36 am ersten Grundkörper 40 befestigt ist. Zuletzt ist noch auf die Senkbohrungen 42 hinzuweisen, mittels derer die erste Baugruppe 30; 30a an einer übergeordneten Baugruppe befestigt werden kann.

Fig. 4 zeigt die Antriebsbaugruppe 90, die als Ganzes am hinteren Längsende des ersten Grundkörpers befestigt werden kann, wobei das Getriebegehäuse (Nr. 91; Fig. 1) der Übersichtlichkeit halber weggelassen wurde. Die Antriebsbaugruppe 90 umfasst den Elektromotor 101 und die Gewindespindel 95, deren Drehachsen 95a; 101 a parallel zueinander ausgerichtet sind. Die Drehantriebsverbindung zwischen dem Elektromotor 101 und der Gewindespindel 95 erfolgt mittels eines endlosen Zahnriemens 94, wobei das kleinere erste Zahnriemenrad 92 am Elektromotor 101 und das größere zweite Zahnriemenrad 93 an der Gewindespindel 95 vorgesehen ist. Der Elektromotor 101 ist mit den Befestigungsschrauben 105 an einer Motorplatte 104 befestigt. Diese wiederum ist in verschiedenen Querpositionen an dem Getriebegehäuse (Nr. 91; Fig. 1) befestigbar, so dass durch eine Verschiebung des Elektromotors 101 die im Betrieb erforderliche Spannung des Zahnriemens eingestellt werden kann. Die entsprechende Position der Motorplatte 104 wird mit dem Zylinderstift 106 gesichert, der formschlüssig in das Getriebegehäuse (Nr. 91; Fig. 1) eingreift. Der Elektromotor 101 ist mit einem Drehgeber 103 ausgestattet, dessen Signal über die elektrische Leitung 102 an eine (nicht dargestellte) übergeordnete Steuerung weitergegeben wird. Über diese elektrische Leitung 102 wird der Elektromotor 101 von der übergeordneten Steuerung auch mit elektrischem Strom versorgt. Weiter ist der Elektromotor 101 mit einem eigenen Motorgehäuse 101b ausgestattet, so dass die oben beschriebene Kühlluft zwischen dem Motorgehäuse 101b und der Motorausnehmung (Nr. 55; Fig. 3) strömt. Hierdurch wird verhindert, dass mit der Kühlluft angesaugte Fremdkörper in das Innere des Elektromotors 101 gelangen können.

Die Gewindespindel 95 umfasst ein Lagerteil 97 und ein Gewindeteil 96. Bei dem Gewindeteil 96 handelt es sich um einen Abschnitt einer im Gewinderollverfahren hergestellten Kugelgewindespindel, die dementsprechend über seine gesamte Länge mit einem oder mehreren Gewindegängen 95b versehen ist. Beim Gewinderollen werden typischerweise Gewindespindeln mit einer Länge von mehreren Metern hergestellt. Diese werden zur Bildung des Gewindeteils 96 ohne weitere Nachbearbeitung nur auf die gewünschte Länge angeschnitten.

Die Verbindung des Lagerteils 97 mit dem Gewindeteil 96 erfolgt über einen Klemmabschnitt 97b am Lagerteil 97, der direkt auf die Gewindegänge 95b des Gewindeteils 96 einwirkt. Die Gewindegänge 96b wurden aus Kostengründen im Klemmbereich nicht entfernt, da sich auch ohne diese Maßnahme eine genügend starke Klemmkraft erreichen lässt. Der Klemmabschnitt 97b des Lagerteils 97 umfasst zwei Klemmbacken, die durch einen Schlitz 97c voneinander getrennt sind, wobei der Schlitz 97c von einer Klemmschraube 100 durchsetzt ist, um die gewünschte Klemmkraft zu erzeugen.

Das zweite Zahnriemenrad 93 ist als gesondertes Bauteil aus Aluminium ausgeführt und drehfest mit dem Lagerteil 97 aus Stahl verbunden. Weiter ist auf dem Lagerteil 97 ein Radialrillenkugellager 98 vorgesehen, das mittels der Nutmutter 99 an seinem Innenring am Lagerteil 97 festgeklemmt ist. Der Außenring 98a des Radialwälzlagers 98 ist im Getriebegehäuse (Nr. 91; Fig. 1) festgelegt. Die Gewindespindel 95 ist nur mit einer einzigen Drehlagerung ausgestattet. Dementsprechend ist das vorliegende Radialwälzlager zweireihig ausgeführt, damit es die notwendige Belastbarkeit aufweist. Der am Lagerteil 97 verbleibende Zapfen 97a kann beispielsweise zur Anbringung einer Bremse genutzt werden, mit der die Gewindespindel 95 still gesetzt werden kann.

Fig. 5 zeigt die zweite Baugruppe 60 in Form des Tischteils, wobei die Befestigungsplatte (Nr. 82; Fig. 1), die an der vorderen Längsstirnseite 12 des zweiten Grundkörpers 70 angeordnet ist, der Übersichtlichkeit halber weggelassen wurde. Die zweite Baugruppe 60 umfasst den zweiten Grundkörper 70, der sich mit einem U-förmigen Querschnitt in Längsrichtung 11 erstreckt. Weiter umfasst die zweite Baugruppe 60 ein vom zweiten Grundkörper 70 gesondert ausgeführtes Schubrohr 80, das einstückig mit einem Verbindungssteg 80b versehen ist, über den es mit dem zweiten Grundkörper 70 verschraubt ist. In der hintersten Stellung der zweiten Baugruppe 60 greift der Verbindungssteg 80b, der am vorderen Längsende des Schubrohres 80 vorgesehen ist, in die Stegausnehmung (Nr. 59; Fig. 3a) der ersten Baugruppe ein, wobei das Schubrohr 80 gleichzeitig deren Schubmhröffnung (Nr. 36c; Fig. 3a) durchsetzt. Das Schubrohr 80 besteht aus Aluminium und ist im Strangpressverfahren hergestellt, wobei die vordere stirnseitige Öffnung des Schubrohres 80 mit einem gesonderten Verschlussstopfen 87 aus Kunststoff verschlossen ist.

Am hinteren Längsende 13 des Schubrohres ist eine Gewindemutter 86 in Form einer Kugelumlaufmutter angebracht, die in Schraubeingriff mit der Gewindespindel (Nr. 95; Fig. 4) der Antriebsbaugruppe steht. Die Gewindemutter 86 ist in der Bauform einer Einschraubmutter ausgeführt, d. h. sie ist am vorderen Ende mit einem Innengewinde versehen, das in ein entsprechendes Außengewinde am Schubrohr 80 aufgeschraubt ist. Um hierbei ein genügend großes Anzugsmoment der Schraubverbindung zu gewährleisten sind die Gewindemutter 86 und das Schubrohr 80 jeweils mit einem Paar gegenüberliegender Schlüsselflächen 86b; 80a versehen.

Weiter ist am hinteren Ende 13 des Schubrohres 80 eine Spaltdichtung 85 vorgesehen, die in einer umlaufenden Nut des Schubrohres 80 aufgenommen ist. Die Spaltdichtung 85 ist in Umfangsrichtung einmal unterbrochen, so dass sie problemlos auf dem Schubrohr 80 montiert werden kann. Mit der Spaltdichtung 85 soll die Mutterausnehmung (Nr. 56; Fig. 3) an dieser Stelle im Wesentlichen luftdicht abgedichtet werden, um den bereits beschriebenen Kühlluftstrom zu erzeugen. Die Spaltdichtung 85 liegt daher im Wesentlichen dicht an der Mutterausnehmung an.

Die Gewindemutter 86 ist nur auf der vom Schubrohr abgewandten Seite mit einer bekannten Enddichtung 86a versehen, die an der Gewindespindel (Nr. 95; Fig. 4) anliegt. Am gegenüberliegenden Ende ist die Gewindemutter 86 offen, so dass eine Verbindung zum Innenraum des Schubrohres 80 besteht, das mit Schmierfett gefüllt ist. Auf diese Weise ist die Schmierung der Gewindemutter 86 für deren gesamte Lebensdauer sichergestellt.

In Fig. 5 ist weiter zu erkennen, dass sich die Versteifungsrippe 78 ebenso wie die zweiten Wälzflächenteile 61 über die gesamte Länge der zweiten Baugruppe 60 erstrecken. Eine Längsverschiebung der zweiten Wälzflächenteile 61 in der zugeordneten Aufnahmausnehmung (Nr. 74; Fig. 2) wird hierbei durch die Abstreifplatte 62 und die Befestigungsplatte (Nr. 82; Fig. 1) unterbunden.

Fig. 6 zeigt einen Wälzkörperumlauf 16, wobei die umgebende erste Baugruppe der Übersichtlichkeit wegen weggelassen wurde. Der Wälzkörperumlauf 16 umfasst eine Reihe von kugelförmigen Wälzkörpern 15, die in Form einer endlosen Schleife angeordnet ist. Die in Fig. 6 vorderen, tragenden Wälzkörper 17 wälzen auf dem ersten Wälzflächenteil 31 ab, welches mit beiden Enden in je eine Umlenkbaugruppe 120 eingreift, in der jeweils nur ein einziger gebogener Umlenkdurchgang (Nr. 125; Fig. 7) vorgesehen ist. Hierfür ist es notwenig, dass jedes erste Wälzflächenteil 61 in Längsrichtung an beiden Enden über den ersten Grundkörper (Nr. 40; Fig. 3) übersteht. Die in Fig. 6 hinteren, rücklaufenden Wälzkörper 18 laufen in dem Rücklaufdurchgang (Nr. 50; Fig. 2), der unmittelbar im ersten Grundkörper der ersten Baugruppe vorgesehen ist. Um eine bestmögliche Ausrichtung zwischen einer Umlenkbaugruppe 120 und dem zugeordneten Rücklaufdurchgang zu erzielen, sind erstgenannte mit fingerartigen Fortsätzen 141 versehen, die in den Rücklaufdurchgang eingreifen.

Fig. 7 zeigt eine Explosionsdarstellung der Umlenkbaugruppe 120. Die Umlenkbaugruppe 120 besteht aus einem ersten 121 und einem zweiten Umlenkteil 122 aus Kunststoff, die weitgehend spiegelsymmetrisch bezüglich der Teilungsebene 123 ausgeführt sind. Die beiden Umlenkteile 121; 122 begrenzen gemeinsam den gebogenen Umlenkdurchgang 125, der die erste Wälzfläche (Nr. 31a; Fig. 2) mit dem Rücklaufdurchgang (Nr. 50; Fig. 2) verbindet. Der gebogene Umlenkdurchgang 125 besitzt eine kreisförmige Querschnittsform die so bemessen ist, dass die kugelförmigen Wälzkörper ihn mit geringem Spiel durchlaufen können.

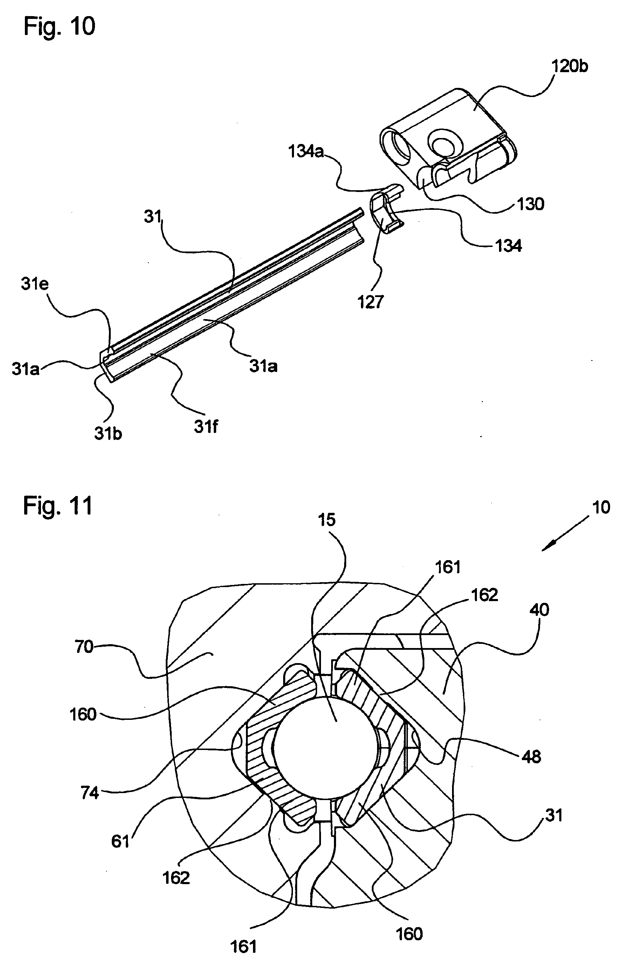

An dem der ersten Wälzfläche zugeordneten Ende des gebogenen Umlenkdurchgangs 125 ist eine Abhebenase 128 vorgesehen, mit der die Wälzkörper von der ersten Wälzfläche abgehoben und in den gebogenen Umlenkdurchgang überführt werden. Die an sich bekannte Abhebenase 128 ist ausschließlich am ersten Umlenkteil 121 ausgebildet, so dass sie mit besonders geringem Abstand zur ersten Wälzfläche angeordnet werden kann. Die Lage der Umlenkbaugruppe 120 gegenüber der ersten Wälzfläche wird mit der Ausrichtausnehmung 127, in die das entsprechende erste Wälzflächenteil eingreift, definiert. Am ersten und am zweiten Umlenkteil 121; 122 ist je eine Hälfte der Ausrichtausnehmung 127 vorgesehen, die jeweils einem V-Schenkel (Nr. 31 e; 31 f in Fig. 11) des ersten Wälzflächenteils zugeordnet ist.

An dem dem Rücklaufdurchgang zugeordneten Ende des gebogenen Umlenkdurchgangs ist ein gesondertes Überführungsteil 140 aus Kunststoff vorgesehen, das mit Bezug auf Fig. 8 und 9 noch näher erläutert wird. Das Überführungsteil 140 ist in einer konischen Ausnehmung 126 aufgenommen, deren kleinster Durchmesser 126a an den zugeordneten Abschnitt des Überführungsstücks 140 im Wesentlichen spielfrei angepasst ist. Aufgrund der konischen Form der genannten Ausnehmung 126 steht dem biegeverformbaren Rohr 150 des Überführungsteils 140 in Querrichtung etwas Freiraum zur Verfügung, so dass es sich entsprechend verbiegen kann, um einen Versatz zwischen dem gebogenen Umlenkdurchgang 125 und dem Rücklaufdurchgang auszugleichen. Hierfür greift es mit drei fingerartigen Fortsätzen 141 in angepasste Nuten (Nr. 50c; Fig. 9) des Rücklaufdurchgangs ein. Das Überführungsteil 140 liegt mit der Stimfläche 150a des biegsamen Rohres 150 an einer zugeordneten Stirnfläche (Nr. 53a; Fig. 3) des ersten Grundkörpers an, so dass es im Wesentlichen spielfrei in der konischen Ausnehmung 126 gehalten ist.

Im Krümmungsmittelpunkt 125a des gebogenen Umlenkdurchgangs ist im ersten und im zweiten Umlenkteil 121; 122 jeweils ein Durchbruch 124 vorgesehen, der von einem Befestigungsbolzen 131 in Form eines Schraubbolzens durchsetzt wird. Hiermit werden einerseits die beiden Umlenkteile 121; 122 fest miteinander verbunden und andererseits die gesamte Umlenkbaugruppe 120 am ersten Grundkörper befestigt. Anstatt des Schraubbolzens 131 kann beispielsweise auch ein Blindniet oder ein ähnlicher Befestigungsbolzen zum Einsatz kommen, der ausschließlich von einer Seite, nämlich der Montageseite (Nr. 32; Fig. 3) her montiert werden kann.

Weiter ist in der Umlenkbaugruppe 120 ein Schmiersystem vorgesehen, das von einem ersten 132 und einem zweiten Schmierölspeicherkörper 133, der aus einem offenzelligen Schaumstoff besteht, gebildet wird. Beide Schmierölspeicherkörper 132; 133 sind jeweils mittels Wasserstrahlschneiden aus einem Plattenmaterial ausgeschnitten, so dass sie die Form eines Profilkörpers mit einem im Wesentlichen konstanten Querschnitt 132a; 132b aufweisen. Der erste Schmierölspeicherkörper 132 ist derjenige mit dem größeren Volumen, weshalb dieser den Hauptteil des Speichervolumens für das Schmieröl bereit stellt. An dem ersten Schmierölspeicherkörper 132 ist einstückig ein Auftragabschnitt 132b vorgesehen, der in den gebogenen Umlenkdurchgang 125 hinein ragt, so dass die dort entlanglaufenden Wälzkörper an diesem entlang streifen, wodurch Schmieröl aus dem ersten Schmierölspeicherkörper 132 auf die Wälzkörper übertragen wird.

Der zweite Schmierölspeicherkörper 133 gleitet unmittelbar auf der ersten Wälzfläche entlang, so dass diese geschmiert und von kleinen Schmutzpartikeln befreit wird. Die Außenkontur des Abstreifabschnitts 133c des zweiten Schmierölspeicherkörpers 133 ist dementsprechend genau an das Querschnittsprofil der ersten Wälzfläche angepasst. Die Querschnittsebenen 132a; 133a des ersten und des zweiten Schmierölspeicherkörpers 132; 133 sind senkrecht zueinander ausgerichtet, wobei der zweite Schmierölspeicherkörper 133 mit einer Nase 133b versehen ist, mit der er den ersten Schmierölspeicherkörper berührt, so dass Schmieröl vom ersten auf den zweiten Schmierölspeicherkörper übertragen werden kann. Hierbei ist beabsichtigt, das gesamte gespeicherte Schmierölvolumen bedarfsgerecht auf die beiden Schmierstellen zu verteilen. Dies kann durch geeignete Dimensionierung der genannten Nase 133b, insbesondere deren Berührfläche zum ersten Schmierölspeicherkörper 132 erreicht werden. Hinzuweisen ist noch auf die Abstreifplatte 129, mit der der verhältnismäßig dünne zweite Schmierölspeicherkörper gegen Verbiegung abgestützt wird. Die Abstreifplatte 129 ist mit geringem Abstand äquidistant zur ersten Wälzfläche ausgebildet und wie die Abhebenase 128, die den zweiten Schmierölspeicherkörper ebenfalls gegen Verbiegung abstützt, vollständig am ersten Umlenkteil 121 ausgebildet. Mit der Abstreifplatte 129 können auch größere Fremdkörper von der ersten Wälzfläche entfernt werden, soweit dies nicht bereits durch den Abstreifvorsprung (Nr. 36a; Fig. 3) der Verschlussplatte bewirkt worden ist.

Fig. 8 zeigt das Überführungsteil 140 stark vergrößert. Das Überführungsteil 140 ist einstückig ausgeführt und aus Kunststoff im Spritzgussverfahren gefertigt. Das Überführungsteil 140 umfasst ein biegeverformbares Rohr 150 mit einer im Wesentlichen kreisförmigen Querschnittsform, an dessen vorderem Ende drei identische fingerartige Fortsätze 141 vorgesehen sind, die gleichmäßig über den Umfang des biegeverformbaren Rohres 150 angeordnet sind. Die fingerartigen Fortsätze 141 besitzen über ihre gesamte Länge eine U-förmige Querschnittsform mit einer Basis 144, von der je zwei U-Schenkel 145 rechtwinklig abstehen. Die Stirnflächen der U-Schenkel bilden Führungsflächen 143 für die durch das Überführungsteil 140 hindurch laufenden kugelförmigen Wälzkörper. Die Länge der U-Schenkel 145 nimmt vom freien Ende der fingerartigen Fortsätze 141 zum biegsamen Rohr hin zu, so dass die genannten Führungsflächen 143 geneigt zum Verlauf des Rücklaufdurchgangs angeordnet sind. Hierbei ist anzumerken, dass die Basis 144 der fingerartigen Fortsätze 141 parallel zum Rücklaufdurchgang ausgerichtet ist, wobei sie mit einem Anlagefortsatz 147 unmittelbar am Grund der zugeordneten Nut (Nr. 50c; Fig. 9) im Rücklaufdurchgang anliegt. Hinsichtlich der genauen Anordnung der Führungsflächen 143 bezüglich des Rücklaufdurchgangs wird auf die Ausführungen zu Fig. 9 verwiesen.

Das biegeverformbare Rohr 150 ist mit insgesamt sechs Fenstern 151 versehen, durch die dessen Biegeelastizität erhöht werden soll. Das biegeverformbare Rohr bildet somit einen flexiblen Durchgang 140a für die Wälzkörper, mit dem ein möglicher Versatz zwischen dem Rücklaufdurchgang und dem gebogenen Umlenkdurchgang ausgeglichen werden kann. Die zwischen den Fenstern 151 gebildeten Stege 152 sind in Verlängerung der U-Schenkel 145 der fingerartigen Fortsätze 141 vorgesehen, so dass die dort vorgesehenen Führungsflächen 143 für die Wälzkörper auf den Stegen 152a unterbrechungsfrei fortgesetzt werden können.

Fig. 9 zeigt einen Querschnitt eines Rücklaufdurchgangs 50 mit eingesetztem Überführungsteil 140. Der Rücklaufdurchgang 50 besitzt eine im Wesentlichen kreisförmige Querschnittsform, die mit geringem Spiel an die Wälzkörper 15 angepasst ist. Über den Umfang des Rücklaufdurchgangs 50 sind insgesamt drei Nuten 50c gleichmäßig verteilt angeordnet. Dieses Nuten 50c erstrecken sich über die gesamte Länge des Rücklaufdurchgangs 50, da dieser zusammen mit den Nuten 50c bereits beim Strangpressen des ersten Grundkörpers hergestellt und nicht mehr weiter bearbeitet wird. In den Nuten 50c ist je ein fingerartiger Fortsatz 141 des Umlenkteils 140 aufgenommen, wobei die Nuten 50c mit geringem Abstand zu diesem ausgeführt sind. An der Basis 144 eines jeden fingerartigen Fortsatzes 140 ist je ein Anlagefortsatz 147 vorgesehen, der jeweils am Grund 50d der Nut 50c anliegt. Die Nuten 50c und die Anlagefortsätze 147 sind hierbei so aufeinander abgestimmt, dass das Überfühmngsteil 140 mit einer geringen Vorspannung im Rücklaufdurchgang 50 aufgenommen ist. Die Breite 50f der Nuten 50c beträgt etwa 40% des Kugeldurchmessers 15a, so dass die Wälzkörper 15 abseits der Nuten 50c noch ausreichend im Rücklaufdurchgang 50 geführt sind.

Aufgrund ihres geneigten Verlaufes sind in Fig. 9 auch die Führungsflächen 143 für die Wälzkörper 15 zu erkennen. Das vordere Ende einer jeden Führungsfläche ist jeweils so weit entfernt 143a von der Mittelachse 50a des Rücklaufdurchgangs 50 angeordnet, dass sichergestellt ist, dass es versenkt in der Nut 50c angeordnet ist. Somit ist ausgeschlossen, dass die vom Rücklaufdurchgang 50 her kommenden in den gebogenen Umlenkdurchgang einlaufenden Wälzkörper 15 mit der Stirnfläche 146 der fingerartigen Fortsätze 141 kollidieren können.

Das hintere Ende der Führungsflächen an den fingerartigen Fortsätzen ist so weit entfernt 143b von der Mittelachse 50a des Rücklaufdurchgangs 50 angeordnet, dass es um einen geringen Betrag aus der zugeordneten Nut 50c herausragt. Somit ist ausgeschlossen, dass die vom gebogenen Umlenkdurchgang her kommenden in den Rücklaufdurchgang 50 einlaufenden Wälzkörper 15 mit der Stirnfläche des ersten Grundkörpers (Nr. 53a; Fig. 3) kollidieren können. Der genannte geringe Überstand ist aufgrund seiner geringen Größe in der maßstäblichen Fig. 9 nur schwer zu erkennen.

Fig. 10 zeigt eine dritte Ausführungsform 120b der Umlenkbaugruppe, bei der das erste Wälzflächenteil 31 drehbar in der Umlenkbaugruppe 120b aufgenommen ist. Die Umlenkbaugruppe 120b umfasst zu diesem Zweck ein gesondertes Halteteil 134, in der die Ausrichtausnehmung 127 für das erste Wälzflächenteil vorgesehen ist. Das Wälzflächenteil 31 ist hierbei, wie bei allen anderen Ausführungsformen der Umlenkbaugruppe, als Profilkörper mit einer konstanten Querschnittsform ausgeführt, wobei an beiden Enden des ersten Wälzflächenteils ebene Längsstirnflächen 31b vorgesehen sind. Die Querschnittsform des ersten Wälzflächenteils 31 ist im Wesentlichen V-förmig mit einem ersten 31e und einem zweiten V-Schenkel 31f. An der Außenseite ist das Halteteil 134 mit einer Kreiszylinderfläche 134a versehen, deren Längsachse durch den Mittelpunkt der kugelförmigen Wälzkörper verläuft. Die Kreiszylinderfläche 134a liegt an einer angepassten Fläche 130 der verbleibenden Umlenkbaugruppe 120b an, so dass das erste Wälzflächenteil 31 um den Mittelpunkt der Wälzkörper drehbar bezüglich der Umlenkbaugruppe 120b ist. Durch diese Maßnahme kann ein und dieselbe Bauform der Umlenkbaugruppe 120b in verschiedenen Bauformen von Linearbewegungsvorrichtungen eingesetzt werden. Mit der beschriebenen Drehbeweglichkeit sollen hierbei den unterschiedlichen Platzverhältnissen in den verschiedenen Linearbewegungsvorrichtungen Rechnung getragen werden. Gleichwohl ist die erste Ausführungsform 120 der Umlenkbaugruppe, die im Übrigen identisch zur dritten Ausführungsform 120b der Umlenkbaugruppe ausgebildet ist, aufgrund des geringem Herstellungsaufwands bevorzugt.

Fig. 11 zeigt einen Querschnitt der Linearbewegungsvorrichtung 10 im Bereich des ersten und des zweiten Wälzflächenteils 31; 61. Zu erkennen ist insbesondere die Gestaltung der Anlagegeometrie des ersten Wälzflächenteils 31 am ersten Grundkörper 40 und des zweiten Wälzflächenteils 61 am zweiten Grundkörper 70, wobei die genannten Geometrien im Wesentlichen punktsymmetrisch zum Mittelpunkt der Wälzkörper 15 ausgeführt sind. Die beiden im Wesentlichen V-förmigen Wälzflächenteile 31; 61 liegen mit einem ersten Schenkel 160 jeweils vollflächig am zugeordneten Grundkörper 40; 70 an, wobei am zweiten Schenkel 161 eine näherungsweise linienförmige Berührung zwischen den Wälzflächenteilen 31; 61 und den zugeordneten Grundkörpern 40; 70 vorgesehen ist. Hierfür ist an den Grundkörpern 40; 70 jeweils ein schmaler Fortsatz 162 angebracht, der sich jeweils über die gesamte Länge des zugeordneten Wälzflächenteils 31; 61 erstreckt. Die Wälzflächenteile 31; 61 liegen mit ihrer ebenen Rückseite an diesem Fortsatz 162 an. Durch diese Maßnahme sollen Formabweichungen zwischen den Aufnahmeausnehmungen 48; 74 und den zugeordneten Wälzflächenteilen 31; 61 kompensiert werden. Insbesondere soll erreicht werden, dass die Wälzflächenteile 31; 61 auch unter ungünstigen Toleranzbedingungen in vorhersehbarer Weise am zugeordneten Grundkörper 40; 70 anliegen, damit die Wälzkörper 15 entlang der gesamten Länge der Wälzflächenteile 31; 61 unter einer im Wesentlichen konstanten Vorspannung laufen.

## Patentansprüche

1. Linearbewegungsvorrichtung (10) mit einer ersten (30; 30a) und einer gegenüber der ersten linearbeweglichen zweiten Baugruppe (60), wobei an der ersten Baugruppe (30; 30a) wenigstens eine, vorzugsweise wenigstens zwei, sich in einer Längsrichtung (11) erstreckende erste Wälzflächen (31a) vorgesehen sind, die je einer zweiten Wälzfläche (61 a) gegenüberstehen, die an der zweiten Baugruppe (60) vorgesehen ist, wobei zwischen der ersten und der zweiten Wälzfläche (31 a; 61 a) eine Reihe von Wälzkörpern (15) angeordnet ist, wobei die erste Baugruppe (30; 30a) einen einstückigen ersten Grundkörper (40) und wenigstens eine Umlenkbaugruppe (120; 120a; 120b) umfasst, wobei in dem ersten Grundkörper (40) wenigstens ein Rücklaufdurchgang (50) vorgesehen ist, wobei weiter in der Umlenkbaugruppe (120; 120a; 120b) wenigstens ein gebogener Umlenkdurchgang (125) vollständig vorgesehen ist, der die erste Wälzfläche (61 a) so mit dem Rücklaufdurchgang (50) verbindet, dass die Wälzkörper (15) endlos umlaufen können, wobei an der Umlenkbaugruppe (120; 120a; 120b) wenigstens ein Fortsatz (141) vorgesehen ist, der in den Rücklaufdurchgang (50) eingreift, wobei der Fortsatz (141) von einem Rohr (150) gebildet wird, das einen Durchgang (140a) für die Wälzkörper (15) begrenzt, wobei der Durchgang (140a) den Umlenkdurchgang (125) mit dem Rücklaufdurchgang (50) verbindet,
**dadurch gekennzeichnet, dass** das Rohr (150) biegeverformbar ist, so dass der Durchgang (140a) flexibel ist,
wobei an dem biegeverformbaren Rohr (150) wenigstens ein fingerartiger sich in Längsrichtung (11) erstreckender Fortsatz (141) vorgesehen ist, der in eine angepasste Nut (50c) des Rücklaufdurchgangs (50) eingreift.

2. Linearbewegungsvorrichtung nach Anspruch 1,
**dadurch gekennzeichnet, dass** der Rücklaufdurchgang (50) vollständig und unmittelbar im ersten Grundkörper (40) vorgesehen ist.

3. Linearbewegungsvorrichtung nach einem der vorstehenden Ansprüche,
**dadurch gekennzeichnet, dass** das biegeverformbare Rohr (150) in einer Ausnehmung (126) der Umlenkbaugruppe (120; 120b) angeordnet ist, wobei die Umlenkbaugruppe (120; 120b) unmittelbar am ersten Grundkörper (40) anliegt.

4. Linearbewegungsvorrichtung nach einem der vorstehenden Ansprüche,
**dadurch gekennzeichnet, dass** das biegeverformbare Rohr (150) wenigstens ein radiales Fenster (151) aufweist.

5. Linearbewegungsvorrichtung nach einem der vorstehenden Ansprüche,
**dadurch gekennzeichnet, dass** das biegeverformbare Rohr (150) einstückig in Form eines gesonderten Überführungsteils (140; 140b) ausgebildet ist.

6. Linearbewegungsvorrichtung nach Anspruch 5 rückbezogen auf Anspruch 3,
**dadurch gekennzeichnet, dass** sich die Ausnehmung (126) in einer Richtung von der Umlenkbaugruppe (120; 120b) zum ersten Grundkörper (40) erweitert, vorzugsweise kegelförmig erweitert, wobei der vom ersten Grundkörper (40) abgewandte Endbereich der Ausnehmung (126) an das gesonderte Überführungsteil (140; 140b) angepasst ist.

## Claims

1. Linear movement device (10), with a first subassembly (30; 30a) and with a second subassembly (60) linearly movable with respect to the first, there being provided on the first subassembly (30; 30a) at least one, preferably at least two, first rolling faces (31a) which extend in a longitudinal direction (11) and which stand respectively opposite a second rolling face (61a) which is provided on the second subassembly (60), a row of rolling bodies (15) being arranged between the first and the second rolling face (31a; 61a), the first subassembly (30; 30a) comprising a one-piece first basic body (40) and at least one deflection subassembly (120; 120a; 120b), at least one return passage (50) being provided in the first basic body (40), there being further provided completely in the deflection subassembly (120; 120a; 120b) at least one bent deflection passage (125) which connects the first rolling face (61a) to the return passage (50) such that the rolling bodies (15) can rotate endlessly, there being provided on the deflection subassembly (120; 120a; 120b) at least one extension (141) which engages into the return passage (50), the extension (141) being formed by a tube (150) which delimits a passage (140a) for the rolling bodies (15), the passage (140a) connecting the deflection passage (125) to the return passage (50), **characterized in that** the tube (150) is flexurally deformable so that the passage (140a) is flexible, there being provided on the flexurally deformable tube (150) at least one finger-like extension (141) which extends in the longitudinal direction (11) and which engages into a matched groove (50c) of the return passage (50).

2. Linear movement device according to Claim 1, **characterized in that** the return passage (50) is provided completely and directly in the first basic body (40).

3. Linear movement device according to one of the preceding claims, **characterized in that** the flexurally deformable tube (150) is arranged in a recess (126) of the deflection subassembly (120; 120b), the deflection subassembly (120; 120b) bearing directly against the first basic body (40).

4. Linear movement device according to one of the preceding claims, **characterized in that** the flexurally deformable tube (150) has at least one radial aperture (151) .

5. Linear movement device according to one of the preceding claims, **characterized in that** the flexurally deformable tube (150) is produced in one piece in the form of a separate transfer part (140; 140b).

6. Linear movement device according to Claim 5 referred back to Claim 3, **characterized in that** the recess (126) widens, preferably widens conically, in a direction from the deflection subassembly (120; 120b) to the first basic body (40), that end region of the recess (126) which faces away from the first basic body (40) being matched to the separate transfer part (140; 140b).

## Revendications

1. Dispositif de déplacement linéaire (10) comprenant un premier module (30 ; 30a) et un deuxième module (60) déplaçable linéairement par rapport au premier, au moins une, de préférence deux, premières surfaces de roulement (31a) s'étendant dans une direction longitudinale (11) étant prévues sur le premier module (30 ; 30a), lesquelles sont en regard d'une deuxième surface de roulement respective (61a), qui est prévue sur le deuxième module (60), entre la première et la deuxième surface de roulement (31a ; 61a) étant disposée une rangée de corps de roulement (15), le premier module (30 ; 30a) comprenant un premier corps de base (40) d'une seule pièce et au moins un module de déviation (120 ; 120a ; 120b), au moins un passage de retour (50) étant prévu dans le premier corps de base (40), au moins un passage de déviation courbe (125) étant en outre complètement prévu dans le module de déviation (120 ; 120a ; 120b), lequel relie la première surface de roulement (61a) au passage de retour (50) de telle sorte que les corps de roulement (15) puissent circuler sans fin, au moins une saillie (141) étant prévue sur le module de déviation (120 ; 120a ; 120b), laquelle vient en prise dans le passage de retour (50), la saillie (141) étant formée par un tube (150) qui limite un passage (140a) pour les corps de roulement (15), le passage (140a) reliant le passage de déviation (125) au passage de retour (50),
**caractérisé en ce que** le tube (150) peut être déformé en flexion, de sorte que le passage (140a) soit flexible,
au moins une saillie (141) s'étendant en forme de doigt dans la direction longitudinale (11) étant prévue sur le tube (150) déformable en flexion, laquelle vient en prise dans une rainure adaptée (50c) du passage de retour (50).

2. Dispositif de déplacement linéaire selon la revendication 1,
**caractérisé en ce que** le passage de retour (50) est prévu complètement et directement dans le premier corps de base (40).

3. Dispositif de déplacement linéaire selon l'une quelconque des revendications précédentes, **caractérisé en ce que** le tube déformable en flexion (150) est disposé dans un évidement (126) du module de déviation (120 ; 120b), le module de déviation (120 ; 120b) s'appliquant directement contre le premier corps de base (40).

4. Dispositif de déplacement linéaire selon l'une quelconque des revendications précédentes, **caractérisé en ce que** le tube déformable en flexion (150) présente au moins une fenêtre radiale (151).

5. Dispositif de déplacement linéaire selon l'une quelconque des revendications précédentes, **caractérisé en ce que** le tube déformable en flexion (150) est réalisé d'une seule pièce sous forme d'une pièce de transfert séparée (140 ; 140b).

6. Dispositif de déplacement linéaire selon la revendication 5 lorsqu'elle se rapporte à la revendication 3, **caractérisé en ce que** l'évidement (126) s'élargit dans une direction depuis le module de déviation (120 ; 120b) jusqu'au premier corps de base (40), de préférence en forme de cône, la région d'extrémité de l'évidement (126) opposée au premier corps de base (40) étant adaptée à la pièce de transfert séparée (140 ; 140b).
